# EUROPEAN PATENT SPECIFICATION

(11) **EP 4 377 162 B1**
(45) Date of publication and mention of the grant of the patent: **25.06.2025**
(21) Application number: 22741301.0
(22) Date of filing: 11.07.2022
(51) Int. Cl.: B60S 1/16, B60S 1/34, F16C 23/10, F16C 33/14

(54) **CONNECTING MEMBER FOR A WINDSCREEN WIPER SYSTEM**
VERBINDUNGSELEMENT FÜR EINE SCHEIBENWISCHERANLAGE
ÉLÉMENT DE LIAISON POUR UN SYSTÈME D'ESSUIE-GLACE

(30) Priority: 28.07.2021 FR 2108205
(43) Date of publication of application: 05.06.2024
(73) Proprietor: VALEO SYSTEMES D'ESSUYAGE, 78322 Le Mesnil Saint Denis (FR)
(72) Inventor: HALLAERT, Vincent, 86108 Chatellerault (FR); CRASKE, Louis, 74321 BIETIGHEIM-BISSINGEN (DE); JABLY, Fabrice, 86108 Chatellerault (FR); SCHNEIDER, Roland, 74321 Bietigheim-Bissingen (DE); XU, Maggie-Jing, 78320 La Verrière (FR); ZHANG, Wuming, 78320 La Verrière (FR)
(74) Representative: Valeo Visibility
(86) International application number: PCT/EP2022/069344
(87) International publication number: WO 2023/006404

(56) References cited:
- WO-A1-2012/072446
- FR-A1- 3 063 315
- US-A1- 2014 368 072

## Description

### Technical Field

The present invention relates to a connecting member for a windscreen wiper, more particularly to a connecting member that provides an optimal friction performance for connecting an output shaft of a wiper motor.

### BACKGROUND

Automotive vehicles are provided with at least one windscreen wiper for cleaning the windscreen. These windscreen wipers generally include a wiper arm comprising a wiper blade that moves over the surface of the windscreen for cleaning the windscreen of any contaminant. A wiper motor, generally through linkages, drives said wiper arm. The motor typically has a worm gear arrangement for transferring the motion of the motor to drive the wiper arm.

In these kind of motors, it is necessary to adjust the axial distance between the worm wheel and the worm gear to minimize play. In order to maintain proper spacing between the worm wheel and the worm gear, the output shaft of the wiper motor is usually mounted in a connecting member such as an eccentric bushing. By rotating the eccentric bushing in its seat, the position of the worm wheel relative to the output shaft is precisely controlled.

Conventionally, the connecting member such as the eccentric bush are fitted into the motor housing by applying force and usually held in place by friction. The fitting works without any issues under normal working conditions. However, under heavy loading conditions, such as in the case of snow or ice buildup, the bushing may slip. The slip may further affect the functionality of the output shaft, thus leading to failure of the motor. Further, if the friction is too high this may cause damage to the wiper motor parts such as the housing and the output shaft, in addition, the increase pressure may require to increase the power needed to operate the wiper motor to transferring power to the wiper arm.

Therefore, there is a need to provide a connecting member that is capable of providing the required friction resistance between the wiper motor parts without causing any damage to the motor housing.

FR 3 063 315 Al discloses a connecting member similar to the invention.

### SUMMARY OF THE INVENTION

An object of the present invention is to solve the disadvantages described above of known connecting members of windscreen wiper systems. In particular, the present invention provides a connecting member for correctly positioning an output shaft in a housing. More particularly, the object of the present invention is to provide a connecting member that increases resistive torque between the output shaft and the connecting member to prevent the rotation of the connecting member without increasing the clamping force of the connecting member.

According to an embodiment of the present invention, there is provided a connecting member for a windscreen wiper comprising a head portion and a shaft portion such that the shaft portion is configured to be assembled between an output shaft and a transmission housing of the windscreen wiper system to adjust the position of the output shaft in the transmission housing.

According to the invention, an outer circumference of the shaft portion comprises a plurality of laser engraved longitudinal patterns having at least one groove engraved in an axial direction of the shaft portion, and such that the plurality of laser engraved longitudinal pattern further includes plurality of microscopic gripping structures formed along a boundary of the at least one groove.

The at least one longitudinal pattern are engraved using controlled laser engraving process so as to realize the optimal friction performance, while minimizing process time and cost. The pattern comprising grooves creates a resistive torque between the connecting member and housing. Further longitudinal grooves provide optimal clamping and avoids need of increasing the clamping force that may compromise the structural integrity of the housing.

In addition, the at least one microscopic gripping structure are configured to hold to a surface and thus increase the friction to provide the required resistive torque to avoid slipping.

In an embodiment of the present invention, wherein the microscopic gripping structures are formed perpendicular to the at least one groove. The microscopic gripping structure being perpendicular to the groove may provide increase resistance to the movement of the connecting member. Further, the microscopic gripping structure may provide gripping force to hold the surface of the housing.

In an alternative embodiment of the present invention, the microscopic gripping structures are formed at an oblique angle with the at least one groove. The oblique angle may provide ease of assembly of the connecting member. Further, the oblique angle may provide friction required to prevent the slip of connecting member at the same time may reduce the wear and tear of parts by maintain the correct friction coefficient.

In an embodiment of the present invention, the gripping structure are formed as hooks embedded on the boundary. The hooks create a "gecko's foot" effect between the components thus improving the friction performance of the connecting member and maintain required play in the assembly to avoid any structural damage.

In an embodiment of the present invention, the plurality of laser engraved longitudinal patterns are formed as plurality of straight stripes that are engraved adjacent to each other. The straight stripes provide a uniform friction across the shaft portion, thus enabling the connecting member to provide better structural integrity as the forces acting are more uniformly distributed.

In an embodiment of the present invention, the boundary of the consecutive straight stripes are coincident forming a ridge. The ridge may be configured to contact the housing to resist the movement of the connecting member to avoid slip.

In an embodiment of the present invention, each of the at least one longitudinal pattern are formed at identical angular intervals. The at least one longitudinal pattern formed at identical intervals improve the friction performance as the friction created due to the longitudinal patterns are uniformly distributed along the surface of the connecting member.

In a particular embodiment, each of the at least one longitudinal patterns are formed at 60° angular intervals to one another. Longitudinal patterns formed at 60° angular intervals to one another provide optimal friction performance and at the same time prevent damage to the connecting member, as engraving too many longitudinal patterns will damage the inner bore of the motor housing and ultimately reduce effectiveness.

In an alternate embodiment of the present invention, the at least one longitudinal pattern consists of at least one cross hatching pattern formed on the outer circumference of the shaft portion. The cross hatching pattern is configured to provide friction between the connecting member and the housing to prevent the rotational movement and linear movement between the component, thus improving the optimal friction performance of the connecting member.

In an alternate embodiment of the present invention, the at least one longitudinal pattern consists of a helical pattern formed on the outer circumference of the shaft portion. Helical and cross-hatching patterns have the additional advantage of being particularly fast and easy to fabricate on a rotating engraving machine tool.

In an embodiment of the present invention, the at least one longitudinal pattern is formed as a continuous pattern on the circumference of the outer circumference of the shaft portion. The continuous pattern enables a simple and easy engraving process such that the patterns may be formed in a single movement along the full length of the connecting member.

In an embodiment of the present invention, the at least one longitudinal pattern formed in the first cross section is different from the at least one longitudinal pattern formed in the second cross section. Non continuous patterns as indicated above that are different in the first and second cross section enables oneto provide an optimal number of longitudinal patterns on the connecting member, depending on the parameters of the particular application in question. The optimal number of patterns provides optimal friction performance without causing any damage to the connecting member of the housing of the windscreen wiper system.

In an embodiment of the present invention, the shaft portion comprises at least one set of laser engraved longitudinal pattern formed proximal to the head portion, and at least one set of laser engraved longitudinal pattern formed distal to the head portion. The two set of longitudinal patterns thus provide a resistive torque that is distributed across the length of the connecting member. Further, the same may reduce the structural damage to the connecting member and the housing.

In an embodiment of the present invention, the at least one longitudinal pattern in the first cross section are formed at 60° intervals and the at least one longitudinal pattern in the second cross section are formed at 30° intervals.

In an embodiment of the present invention, the controlled laser engraving for forming the at least one longitudinal pattern includes controlling the intensity and size of a laser beam. Controlling the intensity and size of the laser beam enables an optimal amount of material to be removed from the surface of the connecting member during the engraving process. The amount of material removed is important to maintain the optimal friction performance of the shaft and at the same to prevent any damage which may be counter effective to the purpose of the connecting member having the longitudinal patterns.

In an embodiment of the present invention, the connecting member is an eccentric bush. In a windscreen wiper system by rotating the eccentric bushing, the position of the worm wheel relative to the shaft is precisely controlled.

In an embodiment of the present invention, the connecting member is made of sintered metal.

### BRIEF DESCRIPTION OF THE DRAWINGS

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
[Fig.1] shows an isometric view of a wiper motor assembly, according to the embodiment of the present invention.
[Fig.2] shows an isometric view of a connecting member comprising at least one longitudinal pattern, according to a first embodiment of the present invention.
[Fig.3] shows a cross sectional view of the connecting member of [Fig.2], according to a first embodiment of the present invention.
[Fig.4] shows an enlarged view of the at least one longitudinal pattern of the connecting member of [Fig.2], according to an embodiment of the present invention.
[Fig.5] shows an isometric view of the housing of a wiper motor configured to receive the connecting member of [Fig.2], according to the embodiment of present invention.
[Fig.6] shows a cross sectional view of the housing of a motor wiper of [Fig.5], according to the embodiment of present invention.

### DETAILED DESCRIPTION

Hereinafter, embodiments of the present invention will be described with reference to the accompanying drawings.

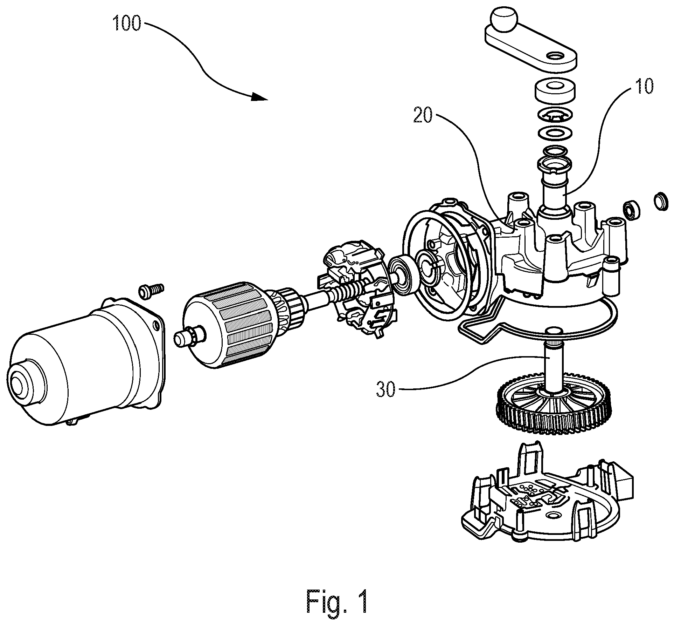

[Fig.1] shows an isometric view of the windscreen wiper system comprising a connecting member of the present invention. The [Fig.1] that is an exploded assembly of the wiper system 100 depicts an output shaft 30 assembled to the housing 20 be means of the connecting member 10, which is an eccentric bushing as known in the art. In order to maintain proper spacing between the worm wheel and the worm gear, the output shaft 30 of a wiper motor is usually mounted in the connecting member 10 of the present invention. Thus, by rotating the connecting member 10 the position of the worm wheel relative to the output shaft is precisely controlled
A connecting member 10 for a windscreen wiper system according to a first embodiment of the present invention is described here after.

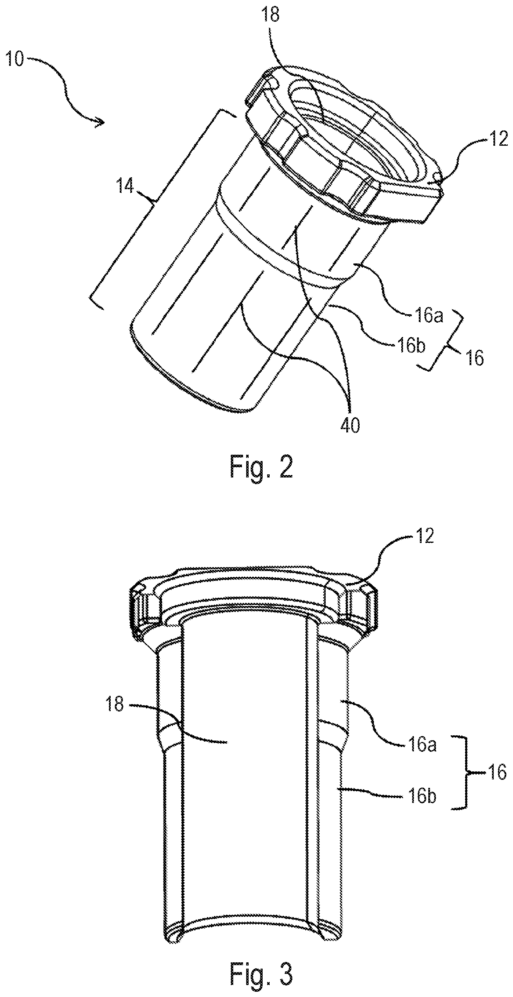

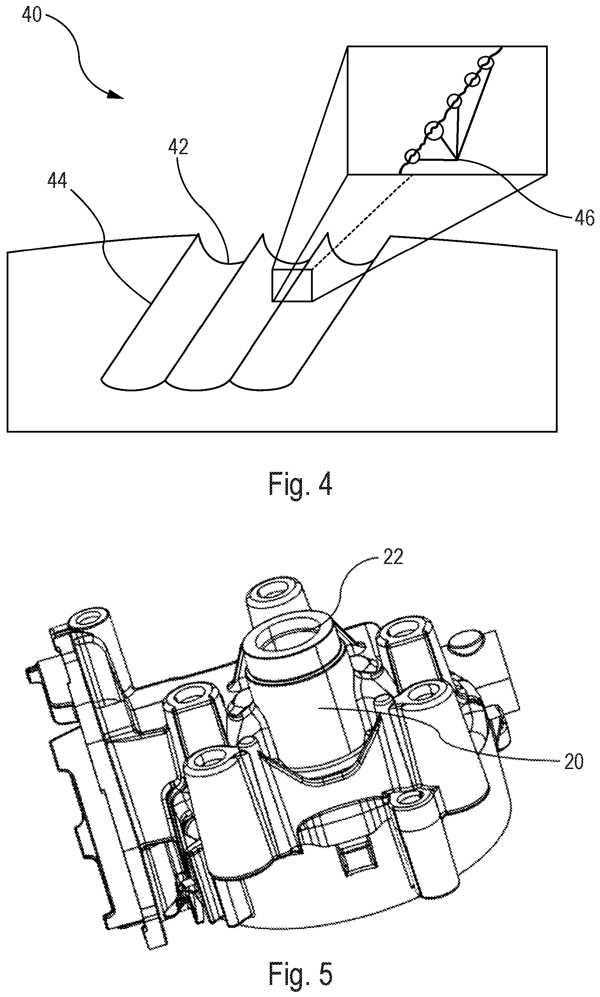

As shown in [Fig.2], the connecting member 10 comprises a head portion 12 and a shaft portion 14, such that the shaft portion 14 may be configured to be assembled between an output shaft 30 and a transmission housing 20 of the windscreen wiper system 100 to adjust the position of the output shaft in the transmission housing 20 (shown in [Fig.4]) of the windscreen wiper system 100. In addition, the head portion 12 may be configured to abut the housing 20 or may be configured to flush fit into in the cavity 22 of the housing 20. Further, the shaft portion 14 as shown in [Fig.2] and [Fig.3] an outer circumference 16 of the shaft portion 14 comprises a plurality of laser engraved longitudinal patterns 40 having at least one groove 42 engraved in an axial direction of the shaft portion 14. Further, the plurality of laser engraved longitudinal pattern 40 further includes plurality of microscopic gripping structures 46 formed along a boundary 44 of the at least one groove 42.

The connecting member 10 may be configured to position the output shaft in the housing such that the axial position of the worm gear is adjusted. The connecting member 10 may be arranged such that an outer circumference 16 of the shaft portion 14 of the connecting member is in contact with the housing and an inner circumference of the shaft portion 14 of the connecting member is contact with the output shaft. Further, the connecting member may be configured to allow the output shaft to rotate about an axis, in addition, the connecting member 10 may be configured to be connected to the housing and avoid slippage while operating the wiper system.

According to an embodiment of the present invention as shown in [Fig.2], the connecting member 10 comprises at least one longitudinal pattern 40 formed on the outer circumference 16 of the shaft portion 14 using a controlled laser engraving process. The at least one longitudinal pattern 40 engraved on the connecting member comprises at least one groove 42 comporting at least one edge 44. In an embodiment, multiple grooves 42 may be engraved adjacent to each other. Further, the grooves 42 and the edge 44 may form a profile comprising of valleys and peak formed alternatively.

The at least one longitudinal pattern may be engraved using a laser engraving process to allow easy workability and as the process is relatively cost effective. The process of engraving may including controlling various parameter pertaining to the engraving process such as the intensity of the laser beam and the depth and profile of the longitudinal pattern. For creating the at least one longitudinal pattern the laser beam from the laser engraving tool may be projected on the outer circumference 16 of the shaft portion 14. Further, the laser beam may be moved over the outer circumference 16 to create the at least longitudinal pattern 40. Further, the laser tool may be made to make multiple passes to create the profile of the pattern as per the requirement. The laser engraving further enables precise amount of metal to be removed from the metal, thus creating a longitudinal profile having a pattern that is capable of providing the required friction between the parts to create an optimal working efficiency.

As shown in [Fig.4], the at least one longitudinal pattern 40 further includes at least one microscopic gripping structure 46 formed along a boundary 44 of the at least one groove 42. The at least one microscopic gripping structure 46 may be configured to increase the friction between the connecting member 10 and the housing 20, thus, preventing relative movement. In a preferred embodiment the microscopic gripping structure 46 may be formed perpendicular to the at least one groove 42. Alternatively, the microscopic gripping structure 46 may be formed at an oblique angle with the at least one groove 42. The microscopic gripping structure 46 may be configured to providing a gripping effect such as that of a gecko gripping structures. This may further enable increase in resistive torque between the parts. Further, the microscopic gripping structure 46 may be formed as hooks embedded on the boundary 44 of the at least one groove 42. The relative angle formed between the microscopic gripping structure and the at least one groove along with the hooks enable increase in friction coefficient, thus, allowing better fitting of the connecting member in the housing. The microscopic gripping structure 46 may be formed on the boundary 44 while engraving the pattern on the outer circumference 16 by laser engraving. They may be formed as burrs along the engraved surface.

According to the embodiment of the present invention, the connecting member 10 may be made of sintered metal that may be engraved using a controlled laser engraving process. Sintered metal parts that are made using powder metallurgy are usually hard and strong, while still being relatively inexpensive to fabricate. These sintered parts are difficult to engrave using traditional engraving processes; however, a controlled laser engraving allows one to produce a pattern without any defect on said parts. As described earlier, a predefined amount and layer of metal is removed by passing a laser beam over a predefined area of the connecting member 10. Multiple passes of the laser beam may be performed over the predefined area to obtain said predefined pattern on the connecting member 10.

In an embodiment of the present invention, the at least one longitudinal pattern 40 consists of a plurality *(i.e.* at least two) of straight stripes distributed adjacent to each other. As shown in [Fig.4], a plurality of laser engraved longitudinal patterns 40 are formed as plurality of straight stripes that are engraved adjacent to each other. Further, the boundary 44 of the consecutive straight stripes are coincident, forming a ridge. In [Fig.4] there is illustrated an the enlarged view of the at least one longitudinal pattern, displaying this ridge. In said [Fig.4] three consecutive stripes are shown, however it is possible to vary the number of strips or patterns that are engraved on the outer circumference 16 as necessary, for instance according to the outer diameter of the bushing or the desired strength of the retention.

Generally speaking, therefore, the number of longitudinal patterns 40 that need to be engraved on the outer surface 16 may be calculated based on the torque and loading condition requirement of the windscreen wiper system 100.

In a preferred embodiment of the present invention, the distance between consecutive boundary 44 and/or the width of the groove 42 may range from 0.08 mm to 0.12 mm and the depth of the groove 42 may range from 0.02 mm to 0.03 mm. The said dimensions of the longitudinal pattern 40 provides optimal gripping effect. However, it is possible to engrave the longitudinal pattern 40 with different dimension without deviating from the scope of the invention.

In an embodiment of the present invention, the shaft portion 14 of the connecting member 10 may be configured to have a variable cross section. Further, the variable cross section can be obtained such that the shaft portion 14 of the connecting member 10 includes a first cross section 16a and a second cross section 16b. The two cross sections may be provided such that the second cross section 16b is different from the first cross section 16a. The cross sections may be provided so that the circumference of either of the first cross section 16a or the second cross section 16b is greater than the other cross section.

In addition, the first cross section 16a and the second cross section 16b may be connected by a third cross section that may comprise a transition, for instance in the form of a tapered profile. The profile as disclosed above is shown in [Fig.2], where a stepped profile of the shaft portion 14 connected by a tapered portion is seen. In another embodiment of the present invention, the circumference of the first cross section 16a and the second cross section 16b are same. In this embodiment, the shaft portion 14 may have a singular cross section extending in the axial direction of the connecting member 10 from the head portion 12.

As disclosed earlier, the location and number of the longitudinal patterns may be calculated based on the torque and loading condition requirement of the windscreen wiper system. In addition to the depth and width of the groove as disclosed earlier the location of the longitudinal pattern 40 also plays an important in increasing the gripping and subsequently the torque resistance.

To obtain a proper resistive torque between the connecting member and the housing 20, it is paramount the at least one longitudinal are engraved at proper and suitable portion of the outer circumference 16. In addition, the number of longitudinal pattern also play an equally important role in obtaining a proper resistive torque.

The interval between the longitudinal patterns 40 may be calculated according to the size of the connecting member 10 to provide optimum friction between the connecting member 10 and the housing 20.

In an embodiment of the present invention, each of the at least one longitudinal patterns 40 may be formed at identical angular intervals on the outer circumference 16. In a preferred embodiment of the invention, each of the at least one longitudinal patterns 40 are formed at 60° angular intervals to one another. The longitudinal pattern 40 formed at said interval allows creating six longitudinal patterns distributed equidistantly to each other.

Alternatively, the shaft portion 14 may comprise at least one set of laser engraved longitudinal patterns 40 formed closer to the head portion 12 and at least one set of laser engraved longitudinal patterns 40 formed further from the head portion (12). Further, the longitudinal patterns may be formed having different angular intervals as well, such as for example a 45° interval or 30° interval. Alternatively, the longitudinal patterns may be formed at irregular intervals as well, which may be particularly advantageous where increased retention at certain angular locations is required.

In an alternate embodiment, the at least one set of laser engraved longitudinal pattern 40 closer to the head portion may be formed at 60° intervals and the at least one set of laser engraved longitudinal pattern 40 further from the head portion may be formed at 30° intervals. This is to ensure that an optimum friction coefficient is obtained without affecting the functionality of the connecting member 10. Alternatively, if need arises the longitudinal patterns 40 may extend the entire length of the connecting member 10 as well.

The preferred embodiment of the present invention as disclosed earlier includes the longitudinal patterns 40 formed in shape of straight stripes (seen in [Fig.4]). alternatively, the at least one longitudinal pattern 40 formed on the connecting member 10 consists of at least one cross hatching pattern formed on the outer circumference 16 of the shaft portion 14. In another embodiment, the at least one longitudinal pattern 40 consists of a helical pattern formed on the outer circumference 16 of the shaft portion 14. These and/or other patterns may be used based on the resistive torque and the design requirement.

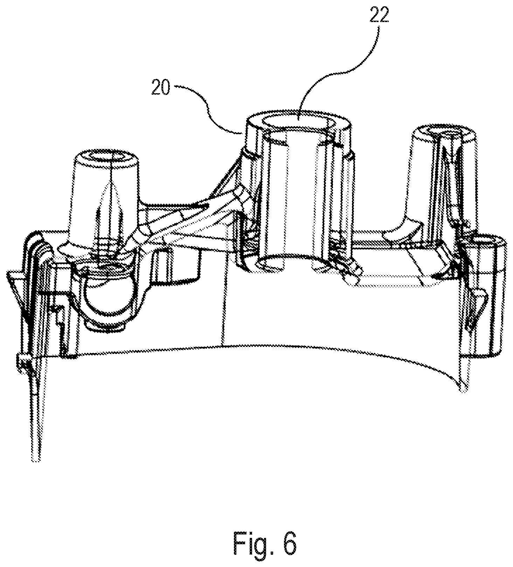

[Fig.5] shows a housing 20 of the windscreen wiper that is adapted to house the connecting member 10 of the present invention. The housing 20 includes a cavity 22 (as shown in [Fig.6].), the connecting member 10 is threaded into said cavity to enable the assembly of the windscreen wiper system 100.

Although the present disclosure provides references to the Figures, all embodiments shown in the figures be intended to explain preferred embodiments of, the present invention by way of example, rather than being intended to limit the present invention. Preferred embodiments of the present invention have been disclosed. However, it should be apparent to a person of ordinary skill in the art that certain modifications would come within the teachings of this invention and that various changes or modifications is made in the present disclosure without departing from the principles and spirit of the disclosure, which are intended to be covered by the present invention as long as these changes or modifications fall within the scope defined in the claims.

## Claims

1. A connecting member (10) for a windscreen wiper system (100), the connecting member comprising:
a head portion (12); and
a shaft portion (14), wherein the shaft portion (14) is configured to be assembled between an output shaft (30) and a transmission housing (20) of the windscreen wiper system (100) to adjust the position of the output shaft in the transmission housing; and
**characterized in that** an outer circumference (16) of the shaft portion (14) comprises a plurality of laser engraved longitudinal patterns (40) having at least one groove (42) engraved in an axial direction of the shaft portion (14), and wherein the plurality of laser engraved longitudinal patterns (40) further includes a plurality of microscopic gripping structures (46) formed along a boundary (44) of the at least one groove (42).

2. The connecting member (10) as claimed in claim 1, wherein the microscopic gripping structures (46) are formed perpendicular to or at an oblique angle with the at least one groove (42).

3. The connecting member (10) as claimed in any of the preceding claims, wherein the microscopic gripping structures (46) are formed as hooks embedded on the boundary (44).

4. The connecting member (10) as claimed in claim 1, wherein the plurality of laser engraved longitudinal patterns (40) are formed as plurality of straight stripes that are engraved adjacent to each other.

5. The connecting member (10) as claimed in claim 4, wherein the boundary (44) of the consecutive straight stripes are coincident forming a ridge.

6. The connecting member (10) as claimed in claim 1, wherein the plurality of laser engraved longitudinal patterns (40) are formed as at least one cross-hatching pattern or a helical pattern on the outer circumference (16) of the shaft portion (14).

7. The connecting member (10) as claimed in any of the preceding claims, wherein plurality of longitudinal patterns are formed at identical angular intervals, in particular at 60° angular intervals to one another.

8. The connecting member (10) as claimed in any of the preceding claims, wherein the plurality of laser engraved longitudinal patterns (40) are formed as a continuous pattern extending the entire length of the shaft portion (14).

9. The connecting member (10) as claimed in any of claims 1 to 7, wherein the plurality of laser engraved longitudinal patterns (40) are formed as non-continuous patterns distributed along the length of the shaft portion (14).

10. The connecting member as claimed in claim 9, wherein the shaft portion (14) comprises at least one set of laser engraved longitudinal patterns (40) proximal to the head portion (12) and at least one set of laser engraved longitudinal patterns (40) formed distal to the head portion (12).

11. The connecting member (10) as claimed in claim 10, wherein the at least one set of laser engraved longitudinal patterns (40) proximal to the head portion are formed at 60° intervals and the at least one set of laser engraved longitudinal pattern (40) distal to the head portion are formed at 30° intervals.

12. The connecting member (10) as claimed in any of the preceding claims, wherein the connecting member (10) is an eccentric bush, preferably fabricated from sintered metal.

## Patentansprüche

1. Verbindungselement (10) für ein Scheibenwischersystem (100), wobei das Verbindungselement Folgendes umfasst: :
ein Kopfteil (12); und
einen Wellenabschnitt (14), wobei der Wellenabschnitt (14) so konfiguriert ist, dass er zwischen einer Ausgangswelle (30) und einem Gehäuse (20) des Scheibenwischersystems (100) montiert werden kann, um die Position der Ausgangswelle in dem Gehäuse einzustellen; und
**dadurch gekennzeichnet, dass** ein Außenumfang (16) des Wellenabschnitts (14) eine Vielzahl von lasergravierten Längsmustern (40) mit mindestens einer Nut (42) umfasst, die in einer axialen Richtung des Wellenabschnitts (14) eingraviert ist, und wobei die Vielzahl von lasergravierten Längsmustern (40) ferner eine Vielzahl von mikroskopischen Greifstrukturen (46) umfasst, die entlang einer Kante (44) der mindestens einen Nut (42) ausgebildet sind.

2. Verbindungselement (10) nach Anspruch 1, wobei die mikroskopischen Greifstrukturen (46) senkrecht zu oder in einem schrägen Winkel zu der mindestens einen Nut (42) ausgebildet sind.

3. Verbindungselement (10) nach einem der vorhergehenden Ansprüche, wobei die mikroskopischen Greifstrukturen (46) als an der Kante (44) eingebettete Haken ausgebildet sind.

4. Verbindungselement (10) nach Anspruch 1, wobei die Mehrzahl von lasergravierten Längsmustern (40) als eine Mehrzahl von geraden Streifen ausgebildet ist, die benachbart zueinander graviert sind.

5. Verbindungselement (10) nach Anspruch 4, wobei die Kanten (44) aufeinanderfolgender gerader Streifen unter Bildung einer Kante zusammenfallen.

6. Verbindungselement (10) nach Anspruch 1, wobei die Vielzahl von lasergravierten Längsmustern (40) als mindestens ein Kreuzschraffurmuster oder ein Schraubenmuster auf dem Außenumfang (16) des Wellenteils (14) ausgebildet sind.

7. Verbindungselement (10) nach einem der vorhergehenden Ansprüche, wobei mehrere Längsmuster in gleichen Winkelabständen, insbesondere in Winkelabständen von 60° zueinander, ausgebildet sind.

8. Verbindungselement (10) nach einem der vorhergehenden Ansprüche, wobei die Vielzahl von lasergravierten Längsmustern (40) als ein kontinuierliches Muster ausgebildet ist, das sich über die gesamte Länge des Wellenabschnitts (14) erstreckt.

9. Verbindungselement (10) nach einem der Ansprüche 1 bis 7, wobei die Vielzahl von lasergravierten Längsmustern (40) als nicht-kontinuierliche Muster ausgebildet sind, die über die Länge des Wellenabschnitts (14) verteilt sind.

10. Verbindungselement nach Anspruch 9, wobei der Wellenabschnitt (14) mindestens einen Satz von lasergravierten Längsmustern (40) in der Nähe des Kopfabschnitts (12) und mindestens einen Satz von lasergravierten Längsmustern (40), die entfernt von dem Kopfabschnitt (12) ausgebildet sind, umfasst.

11. Verbindungselement (10) nach Anspruch 10, wobei der mindestens eine Satz von lasergravierten Längsmustern (40) proximal zu dem Kopfabschnitt in Intervallen von 60° ausgebildet ist und der mindestens eine Satz von lasergravierten Längsmustern (40) distal zu dem Kopfabschnitt in Intervallen von 30° ausgebildet ist.

12. Verbindungselement (10) nach einem der vorhergehenden Ansprüche, wobei das Verbindungselement (10) eine exzentrische Hülse ist, die vorzugsweise aus Sintermetall hergestellt ist.

## Revendications

1. Elément de connexion (10) pour un système d'essuie-glace (100), l'élément de connexion comprenant :
une partie de tête (12) ; et
une partie d'arbre (14), dans laquelle la partie d'arbre (14) est configurée pour être assemblée entre un arbre de sortie (30) et un boîtier (20) du système d'essuie-glace (100) pour ajuster la position de l'arbre de sortie dans le boîtier; et
**caractérisé en ce qu'**une circonférence extérieure (16) de la partie d'arbre (14) comprend une pluralité de motifs longitudinaux (40) gravés au laser ayant au moins une rainure (42) gravée dans une direction axiale de la partie d'arbre (14), et dans lequel la pluralité de motifs longitudinaux (40) gravés au laser comprend en outre une pluralité de structures de préhension microscopiques (46) formées le long d'un bord (44) de la au moins une rainure (42).

2. Elément de connexion (10) selon la revendication 1, dans lequel les structures de préhension microscopiques (46) sont formées perpendiculairement à ou à un angle oblique avec la au moins une rainure (42).

3. Elément de connexion (10) selon l'une quelconque des revendications précédentes, dans lequel les structures de préhension microscopiques (46) sont formées comme des crochets encastrés sur le bord (44).

4. Elément de connexion (10) selon la revendication 1, dans lequel la pluralité de motifs longitudinaux gravés au laser (40) sont formés comme une pluralité de bandes droites qui sont gravées adjacentes les unes aux autres.

5. Elément de connexion (10) selon la revendication 4, dans lequel les bords (44) des bandes droites consécutives coïncident en formant une arête.

6. Elément de connexion (10) selon la revendication 1, dans lequel la pluralité de motifs longitudinaux (40) gravés au laser sont formés comme au moins un motif de hachures croisées ou un motif hélicoïdal sur la circonférence extérieure (16) de la partie d'arbre (14).

7. Elément de liaison (10) selon l'une quelconque des revendications précédentes, dans lequel plusieurs motifs longitudinaux sont formés à des intervalles angulaires identiques, en particulier à des intervalles angulaires de 60° les uns par rapport aux autres.

8. Elément de connexion (10) selon l'une quelconque des revendications précédentes, dans lequel la pluralité de motifs longitudinaux (40) gravés au laser sont formés comme un motif continu s'étendant sur toute la longueur de la partie d'arbre (14).

9. Elément de connexion (10) selon l'une quelconque des revendications 1 à 7, dans lequel la pluralité de motifs longitudinaux (40) gravés au laser sont formés comme des motifs non continus répartis sur la longueur de la partie d'arbre (14).

10. Elément de connexion selon la revendication 9, dans lequel la partie d'arbre (14) comprend au moins un ensemble de motifs longitudinaux (40) gravés au laser à proximité de la partie de tête (12) et au moins un ensemble de motifs longitudinaux gravés au laser (40) formés à distance de la partie de tête (12).

11. Elément de connexion (10) selon la revendication 10, dans lequel le au moins un ensemble de motifs longitudinaux (40) gravés au laser proximaux à la partie de tête sont formés à des intervalles de 60° et le au moins un ensemble de motifs longitudinaux (40) gravés au laser distaux à la partie de tête sont formés à des intervalles de 30°.

12. Elément de liaison (10) selon l'une quelconque des revendications précédentes, dans lequel l'élément de liaison (10) est une douille excentrique, de préférence fabriquée en métal fritté.
